**Europäisches Patentamt**

**European Patent Office**

**Office européen des brevets**

(19)

(11) Veröffentlichungsnummer : **0 492 252 B1**

(12)

# EUROPÄISCHE PATENTSCHRIFT

(45) Veröffentlichungstag der Patentschrift :
**15.11.95 Patentblatt 95/46**

(51) Int. Cl.⁶ : **H04Q 11/04, H04Q 3/545**

(21) Anmeldenummer : **91121083.9**

(22) Anmeldetag : **09.12.91**

(54) **Kommunikationssystem mit Anschlussbaugruppen, einem der Durchschaltung von Verbindungen dienenden Koppelfeld, einem zentralen Zeichenkanal sowie einem der zentralen Steuerung dienenden Multiprozessorsystem.**

(30) Priorität : **21.12.90 DE 4041277**

(43) Veröffentlichungstag der Anmeldung :
**01.07.92 Patentblatt 92/27**

(45) Bekanntmachung des Hinweises auf die
Patenterteilung :
**15.11.95 Patentblatt 95/46**

(84) Benannte Vertragsstaaten :
**AT BE CH DE ES FR GB GR IT LI LU NL SE**

(56) Entgegenhaltungen :
**FR-A- 2 368 089**

(56) Entgegenhaltungen :
GB-A- 2 227 584
US-A- 3 967 248
SOFTWARE ENGINEERING FOR TELECOM-
MUNICATION SWITCHING SYSTEMS Nr. 223,
4. Juli 1983, LUND, SE Seiten 157 - 162 EN-
GRAM ET AL. 'Transparent software and hardware changes in a telecommunication system'

(73) Patentinhaber : **SIEMENS
AKTIENGESELLSCHAFT
Wittelsbacherplatz 2
D-80333 München (DE)**

(72) Erfinder : **Schwagmann, Josef, Dipl.-Phys.
Werner-EGK-Weg 3
W-8060 Dachau (DE)**

**Beschreibung**

Die Erfindung betrifft eine Einrichtung gemäß Oberbegriff des Patentanspruchs 1.

Komplexe Kommunikationssystemen sind meist als Multiprozessorsysteme realisiert. Diese besitzen gegenüber Monoprozessorsystemen Vorteile, wie zum Beispiel eine drastischen Erhöhung der Verarbeitungsgeschwindigkeit. Dies wird durch eine parallele Bearbeitung mehrerer Aufgaben erreicht, die jeweils Teilaufgaben einer zu bearbeitenden Aufgabe darstellen; jeder Prozessor bearbeitet eine Teilaufgabe und die Teilergebnisse werden zu einem Gesamtergebnis zusammengesetzt. Neben der hohen Verarbeitungsgeschwindigkeit besteht ein weiterer Anspruch, der an moderne Kommunikationssysteme gestellt wird, darin die jederzeitige Verfügbarkeit des Systems für alle Teilnehmer sicherzustellen, was durch eine weitgehende Doppelung zentraler Teile des Systems erreicht wird. So stellen internationale Normierungsgremien für Kommunikationssysteme/Kommunikationsnetze - beispielsweise CCITT - die Forderung nach einer hohen Verfügbarkeit des Systems über die gesamte Lebensdauer, z.B. in der Form, daß eine Kommunikationsanlage auf die Dauer von 20 Jahren höchstens zwei Stunden ausfallen darf. Um diesen Ansprüchen gerecht zu werden, müssen die systeminternen Abläufe von einer Vielzahl von Prozessen und Prozeduren gesteuert und überwacht werden. Damit erhöht sich aber die Komplexität der in einem Kommunikationssystem ablaufenden Prozeduren und Prozesse drastisch. Allgemein gilt, daß je komplexer und vielschichtiger ein System ist, um so höher die Fehlerwahrscheinlichkeit wird. Daher müssen die während des Betriebes auftretenden Fehler analysiert und anschließend Korrekturdaten unmittelbar in das System eingebracht werden, um damit die Fehlerwahrscheinlichkeit des Systems zu vermindern und somit die Verfügbarkeit des Systems zu erhöhen. Generell sind Fehler bei der Erstellung von Prozeduren unvermeidbar. Zwar können Syntaxfehler im Zuge der Erstellung durch spezielle Prozeduren, wie z. B. Compilerprozeduren, eliminiert werden, jedoch können logische Codierungsfehler über eine solche Syntaxprüfung nicht ermittelt werden; sie wirken sich somit während des laufenden Betriebes aus und treten insbesondere dort auf, wo ein komplexes Zusammenspiel von Prozeduren und Prozessen stattfindet. Die Komplexität eines derartiges Systems macht aber das Auftreten eines logischen Codierungsfehlers erst nach längerer Betriebszeit möglich und erschwert ein unmittelbares Beheben eines solchen Fehlers.

Zwar gestatten es Monoprozessorsysteme herkömmlicher Art, bei geringem Zeit- und Arbeitsaufwand korrigierte und damit neu codierte Prozedurabläufe nochmals zu editieren, zu compilieren, zu binden sowie erneut in das System einzubringen, jedoch ist bei den heute verwendeten, auf Multiprozessorbasis basierenden Kommunikationssystemen ein derartiges Vorgehen praktisch nicht mehr möglich, da das Einbringen auch kleinster Korrekturen ein erneutes Editieren, Kompilieren sowie Binden aller Prozeduren des gesamten Kommunikationssystems bedeuten würde. Ein solcher Prozeß würde im allgemeinen aber mehrere Tage in Anspruch nehmen, und somit Rechenzentren lange Zeit für weitere Aufgaben blockieren.

Die Notwendigkeit, Verfahren zu entwickeln, die ein schnelles, kurzfristiges Einbringen kleinerer Fehlerkorrekturen in die Software eines Kommunikationssystems gestatten, führte zur Entwicklung von Prozeduren zur Schnellkorrektur von logischen Codierungsfehlern, im folgenden Patches genannt. Mit Patches lassen sich kleine Software-Korrekturen kurzfristig ausführen. Die Änderungen werden durch Anweisungen über ein Bedienterminal unmittelbar den zu korrigierenden Codeabläufen in den jeweiligen Prozeduren zugeführt. Bei einfacheren logischen Codierungsfehlern wird dabei der fehlerhafte Code überschrieben. Falls jedoch darüberhinaus im Programmablauf zusätzlicher Code eingefügt werden muß, wird der eingebrachte Patch mit einem sogenannten 'Rucksack' verbunden. Dieser enthält jenen zusätzlichen Programmcode, der zur Behebung des logischen Fehlers notwendig ist, und wird in einem speziell zu diesem Zweck vorgesehenen Speicherbereich abgelegt. Die Korrektur des nun geänderten Programmcodes macht sich beim späteren Ablauf dahingehend bemerkbar, daß die Prozedur an der entsprechenden 23derungsstelle zu dem eingebrachten 'Rucksack' verzweigt, und nach Abarbeitung desselben ein Rücksprung zum ursprünglichen Programmcode erfolgt. Gesteuert wird dieser Vorgang über eine sogenannte Patch-Verwaltung. In dieser sind in Tabellenform die Adressen der den Patches zugeordneten 'Rucksäcke' abgelegt.

Die Erstellung der Prozeduren eines Kommunikationssystems impliziert mehrere, komplexe Entwicklungsschritte, da zum einen die Prozedur unmittelbar nach dem Codierungsprozeß noch mit Fehlern behaftet ist, die erst nach weiteren Entwicklungsschritten beseitigt werden und zum anderen weitere Leistungsmerkmale hinzugefügt werden, was in der Regel ein Einbinden weiterer Prozeduren in die Software des Kommunikationssystems bedeutet.

Aus organisatorischen Gründen wird jedem Entwicklungsschritt eine Versionsnummer zugeteilt. Über einen Patch werden aber nur vorübergehende, keine neuen Versionen begründenden Fehlerkorrekturen in das System eingebracht. Werden nun im Zuge der Verwendung neuer Leistungsmerkmale neue Prozedurkomponenten erstellt und in das System eingebunden, denen dann entsprechend neue Versionsnummern zugeteilt werden, so wird diese Gelegenheit dazu benutzt, die - vorübergehend - eingeführten Patches vollständig in die Prozeduren einzuarbeiten. In den mit einer neuen Versionsnummer versehenen Prozeduren werden die "ehemaligen" Patches also nicht mehr mitgeführt.

Mit diesem Verfahren zur schnellen Fehlerkorrektur (Patch-Verfahren) lassen sich kurzfristig einfachere logische Codierungsfehler korrigieren und in die Prozeduren des Kommunikationssystems einbringen. Unter einfacheren logischen Codierungsfehlern sind z. B. solche Fehler zu verstehen, die in einem von einem einzigen Prozessor zu bearbeitenden Modul auftreten. Durch die Entwicklung zu Multiprozessorsystemen gibt es aber Konstellationen, die in einer Monoprozessor-Architektur nicht auftreten. Logische Codierungsfehler sind dabei durch das Zusammenspiel mehrerer Prozeduren und Prozesse derart komplex, daß ein unmittelbares Korrigieren von fehlerhaftem Code in den jeweiligen Prozeduren nicht mehr ohne weiteres möglich ist. So sind neben denen aus der bisherigen "Monoprozessorwelt" bekannten Fehlern solche Fehlerarten hinzugekommen, die

- modulübergreifend auftreten,
- prozessorübergreifend auftreten,
- nur dann auftreten, wenn eine bestimmte Netzumgebung vorhanden ist, oder
- nur in Verbindung mit einer entsprechenden Firmware auftreten.

Derartige komplexe logische Codierungsfehler können aber mit dem beschriebenen Patch-Verfahren nicht mehr korrigiert und in das System eingebracht werden, da die Fehlerkorrekturen - z. B. im falle modulübergreifender logischer Codierungsfehler - in einem Änderungsschritt eingebracht werden müssen.

Wie bereits erwähnt, ist die Komplexität eines Systems unmittelbar mit seiner Fehlerwahrscheinlichkeit - und damit einhergehend - seiner Verfügbarkeit korreliert. Dies bedeutet in der Praxis, daß je Komplexer das System ist, sich um so mehr Patches - also schnelle Fehlerkorrekturen - in seinen Modulen, Prozeduren und Tabellen befinden. Auf diese Patches greifen aber im weiteren Verlauf des Entwicklungsprozesses der Prozeduren eines Kommunikationssystems - in diesem Fall also bis zur Erteilung der nächsten Versionsnummer - weitere Prozeduren zu.

Den Patches sind im Arbeitsspeicher feste physikalische Adressen zugeordnet. Sollen nun im Laufe eines Entwicklungsprozesses zusätzliche Daten in die Tabellen des Kommunikationssystems eingefügt werden - insbesondere, wenn zusätzliche Teilnehmer an das Kommunikationssystem angeschlossen werden - so ist dies an sich mit einer Verschiebung dieser physikalischen Adressen verbunden. Dies wird jedoch dadurch vermieden, daß in einer Abfolge mühsamer Einzelschritte die in Frage kommenden Patches analysiert und - vorübergehend - entfernt werden, um die entsprechenden Daten einzubringen.

Insbesondere das Entfernen bereits eingebrachter Patches bereitet in der Praxis aber enorme Probleme, da ehemals bereinigte Fehler nun unter Umständen wieder zum Vorschein treten können. Da - wie erwähnt - auf bereits eingebrachte Patches im weiteren Verlauf des Entwicklungsprozesses des Kommunikationssystems weitere Prozeduren zugreifen, besteht eine nicht zu vernachlässigende Wahrscheinlichkeit eines Totalabsturzes bzw. einer drastischen Eingrenzung der Verfügbarkeit des gesamten Kommunikationssystems.

Der Erfindung liegt die Aufgabe zugrunde, ein Verfahren anzugeben, das Kommunikationssystem während des laufenden Betriebes um zusätzliche Teilnehmerdaten mit einer ausreichenden Praktikabilität zu erweitern, ohne dabei die Verfügbarkeit einzugrenzen.

Diese Aufgabe wird ausgehend vom Oberbegriff des Patentanspruchs 1 erfindungsgemäß durch dessen kennzeichnende Merkmale gelöst.

Wesentlich für die Erfindung ist das Erweitern von Tabellen um zusätzliche Teilnehmer, ohne besondere Einschränkung des vermittlungstechnischen Verkehrs. Das Problem, in den Tabellen noch existierende Patches kurzfristig zu entfernen, wird dadurch gelöst, daß das Hinzufügen zusätzlicher Teilnehmerdaten auf einem externen Speichermedium durchgeführt wird. Nach Abschluß des Einfügeprozesses werden dan die neuen Tabellen in die entsprechenden Bereiche der Arbeitsspeicher Schritt für Schritt nachgeladen. Dadurch wird eine ins Gewicht fallende Eingrenzung der Verfügbarkeit des gesamten Kommunikationssystems vermieden.

Im folgenden wird die Erfindung anhand eines figürlich dargestellten Ausführungsbeispiels erläutert.

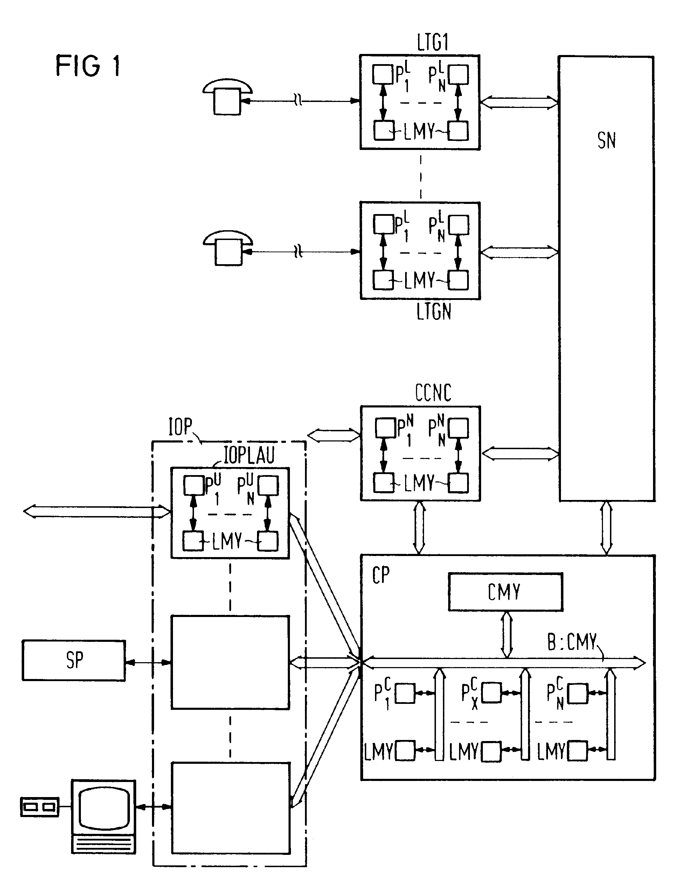

FIG 1 zeigt ein modular strukturiertes Kommunikationssystem. Dieses ist ausgestaltet durch

- ein der Durchschaltung von Verbindungen dienendes Koppelfeld SN
- dem Anschluß von Teilnehmergeräten dienende Anschlußbaugruppen $LTG_1...LTG_n$ mit Prozessoren $P_1^L...P_N^L$ und diesen zugeordneten lokalen Speichersystemen LMY
- eine der Steuerung eines zentralen Zeichenkanals CCNC dienende Anschlußbaugruppe mit Prozessoren $P_1^N...P_n^N$ und diesen zugeordneten lokalen Speichersystemen LMY
- einen Koordinationsprozessor CP, bestehend aus
  -- einem für alle Einheiten des Koordinationsprozessors CP gemeinsamen Speichersystem CMY
  -- einem für alle Einheiten des Koordinationsprozessors CP gemeinsamen zentralen Bussystem B:CMY
  -- mehreren Prozessoren $P_1^C...P_n^C$ mit diesen Zugeordneten lokalen Speichersystemen LMY

- sowie weitere Anschlußbaugruppen $IOP_1$-...$IOP_n$ , die an den zentralen Systembus B:CMY des Koordinationsprozessors CP angeschlossen und über die externe Speichersysteme SP, externe Ein-/Ausgabegeräte PC sowie ein externes Rechenzentrum RZ anschaltbar sind.

Im Ausführungsbeispiel ist das externe Speichermedium in Form eines Plattenspeichers SP ausgestaltet. Dieser hat über eine der Anschlußbaugruppen IOP Zugang zu dem Koordinationsprozessor CP. Alle Schreib-/ Lesevorgänge zwischen den Arbeitsspeichern LMY, CMY des Koordinationsprozessors CP und des Plattenspeichers SP erfolgen über diese Schnittstelle. Generell sind auf dem Plattenspeicher SP die in den Arbeitsspeichern LMY des Kommunikationssystems ablaufende System-Software und spezielle Teilnehmerdaten abgelegt; letztere sind organisatorisch in Dateien, im folgenden Datenbibliotheken genannt, zusammengefaßt und bestehen aus mehreren Bibliothekselementen, die wiederum mehrere Tabellen, die in Form von Software-Modlen realisiert sind, enthalten. Wie bereits eingangs erwähnt, werden während des Entwicklungsprozesses der Prozeduren eines Kommunikationssystems Patches in die Software eingeführt. Im speziell vorliegenden Fall von Datentabellen bedeutet dies, daß in beliebiger Reihenfolge zwischen den in den Tabellen enthaltenen Teilnehmerdaten Patches abgespeichert sind. Diese Patches - wie übrigens auch die anderen Teilnehmerdaten sind unter festen physikalischen Adressen, auf die vermittlungstechnische Prozeduren und Prozesse zugreifen, abgespeichert.

Jedem Modul ist darüber hinaus eine sogenannte Patch - sowie eine Modulverwaltung zugeordnet. In der Modulverwaltung sind alle ein Modul betreffenden Daten wie zum Beispiel dessen logische Anfangsadresse sowie dessen Länge abgelegt. Aufgrund der Kenntnis der Anfangsadresse eines Moduls sowie seiner Länge lassen sich über Prozeduren die logischen Adressen der einzelnen Teilkomponenten des Moduls - nämlich die abgelegten Teilnehmerdaten sowie eventuell vorhandene Patches - ermitteln. Die Patch-Verwaltung enthält alle einen Patch betreffenden Daten, wie z.B. die Adressen des Patches innerhalb des betreffenden Moduls, dessen Anfangsdresse, alle Änderungen, die in diesem Modul durchgeführt wurden, sowie den Status des eingeführten Patch's. Somit ist aus der einem Modul zugeordneten Patch-Verwaltung jederzeit nachvollziehbar, welche Daten an welcher Adresse im Laufe des Entwicklungsprozesses geändert wurden.

Weiterhin ist auf Platte der Code der Prozeduren des Kommunikationssystems organisatorisch ebenfalls in Bibliotheken, den sogenannten "TASKLIB's" zusammengefaßt. Auch hier werden in beliebiger Reihenfolge während des Entwicklungsprozesses der Software Patches mit eventuell angehängten "Rucksäcken" eingefügt. Daher sind auch hier Patch-Verwaltungen und - da die Prozeduren in Software-Modulen realisiert sind - Modulverwaltungen den den Code enthaltenden Tabellen zugeordnet. Der in der 'TASKLIB' abgelegte Code greift beim Ablauf im Arbeitsspeicher auf die Daten der Datenbibliothek zu. Es muß unter allen Umständen sichergestellt werden, daß die in der Datenbibliothek abgelegten Daten stets unter derselben Adresse gespeichert sind, damit die Prozeduren der TASKLIB jederzeit beim Zugriff auf die Datenbibliothek die für sie relevanten Daten unter der richtigen Adresse wiederfinden. In der Regel ist dies auch sichergestellt.

Nun werden an ein Kommunikationssystem oft neue Teilnehmer hinzugeschaltet. Dies bedeutet in der Praxis, daß die Teilnehmerdaten enthaltende Datenbibliotheken in diesem Fall erweitert werden müssen; damit erhalten aber die Datenpatches neue Adressen, die den in der 'TASKLIB' abgelegten Zugriffsprozeduren mitgeteilt werden müssen.

Bevor die Datenbibliotheken um weitere Teilnehmerdaten erweitert werden, findet zunächst ein Umkopieren in Hilfsbibliotheken statt. In diesen werden die eigentlichen Erweiterungsvorgänge durchgeführt. Dies hat insbesondere den Vorteil, daß die vermittlungstechnischen Prozeduren währenddessen noch auf die alten, Teilnehmerdaten enthaltenden Datenbibliotheken zugreifen können und demzufolge der vermittlungstechnische Verkehr nicht unterbrochen wird.

In einem ersten Schritt werden nun die vormals eingefügten Patches durch spezielle Prozeduren aus den entsprechenden Modulen wieder entnommen; der ursprüngliche Zustand der Daten wird also wiederhergestellt. Da jeder Patch, also jede Änderung von Teilnehmerdaten in der dem Modul zugeordneten Patch-Verwaltung festgehalten ist, kann dieser Prozeß ohne besondere Schwierigkeiten durchgeführt werden. Die vermittlungstechnischen Prozeduren benutzen während dieses Prozesses nach wie vor die Tabellen der Hauptbibliothek, womit die Gefahr gebannt ist, daß beim Entfernen des Patches - was im Grunde einem Einfügen alter 'logischer Codierungsfehler' gleichkommt -, die entsprechenden Fehlfunktionen wieder auftreten.

In einem zweiten Schritt sorgt eine Erweiterungsprozedur dafür, daß die Teilnehmerdaten enthaltende Datenmodule um zusätzlichen Speicherbereich erweitert werden; hier können später die neuen Teilnehmerdaten eingetragen werden. Eine sogenannte Shift-Prozedur bindet die derart erweiterten Datenmodule zu einer neuen Datenbibliothek zusammen. Sie führt darüber hinaus die Zuordnung der neuen Anfangsadressen der Datenmodule zu den alten Anfangsadressen durch. Des weiteren müssen jetzt die Adressen in der Modul-Verwaltung sowie der Patch-Verwaltung eingetragen werden. Durch den Bindevorgang haben sich aber auch insbesondere die Adressen verändert, unter denen früher die Patches gelegen haben. Zwar sind die Patches vor der Erweiterung aus den Datenmodulen entfernt worden, in den den Datenmodulen zugeordneten Patchverwaltungen sind sie jedoch nach wie vor enthalten; ihr Statusregister zeigt dort lediglich den Zustand 'INACTIVE' an, womit sie für die Datenmodule und eventuell auf diese zugreifende Prozeduren der 'TASKLIB' als nicht existent gelten. In einem dritten Schritt fügt nun eine weitere Prozedur die vormals entnommenen Patches wieder ein. Synchron dazu werden die dazugehörigen neuen Patchadressen in der Patchverwaltung der Datenmodule entsprechend geändert. Dadurch werden automatisch die Sprungadressen auf diese Patches im Code der TASKLIB-Prozeduren aktualisiert. Damit ist sichergestellt, daß trotz Verschiebung der physikalischen Adressen durch die Erweiterung der Datenmodule keine fehlerhaften Zugriffe der TASKLIB-Prozeduren auf Patches der Datenmodule erfolgen.

In einem letzten Schritt können nun die derart erweiterten Bibliotheken schrittweise in die Arbeitsspeicher des Kommunikationssystems geladen werden.

Mit einem derart ausgestalteten Kommunikationssystem ist somit sichergestellt, daß die generelle Verfügbarkeit des Systems für alle Teilnehmer erhalten bleibt.

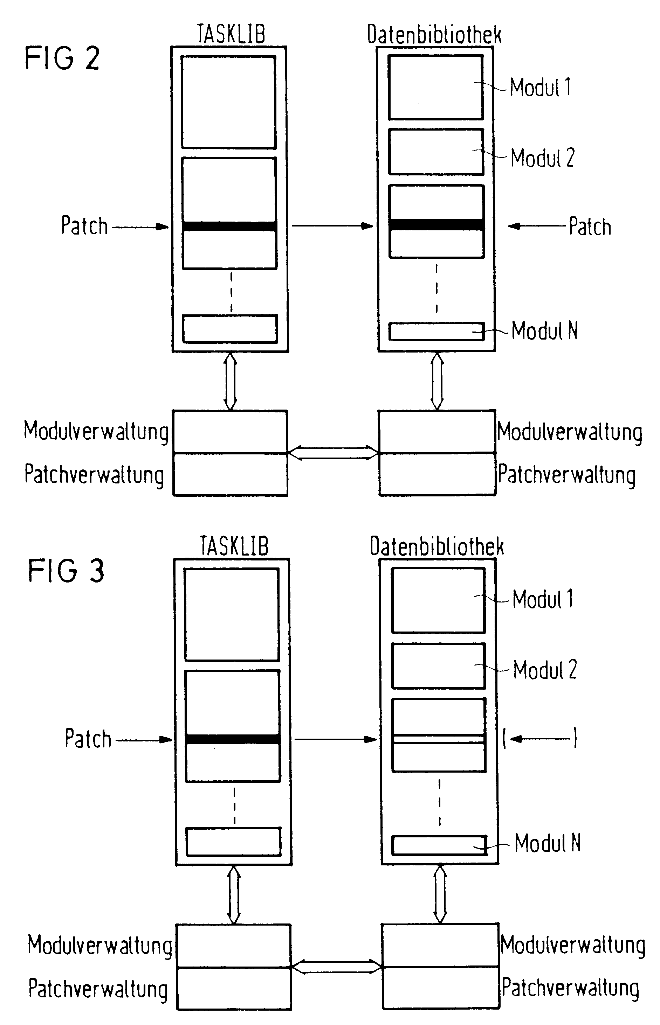

Die Vorgehensweise ist detailliert im Ausführungsbeispiel in den Figuren 2 bis 5 demonstriert.

FIG 2 zeigt die TASKLIB, die Datenbibliothek sowie die zugeordneten Patch- und Modulverwaltungen. Zur näheren Erläuterung sei hier ein Patch in Modul 3 der Datenbibliothek eingefügt. Dieser Patch wird von einem Patch der TASKLIB adressiert. In FIG 3 wird der Patch in Modul 3 der Datenbibliothek entfernt.

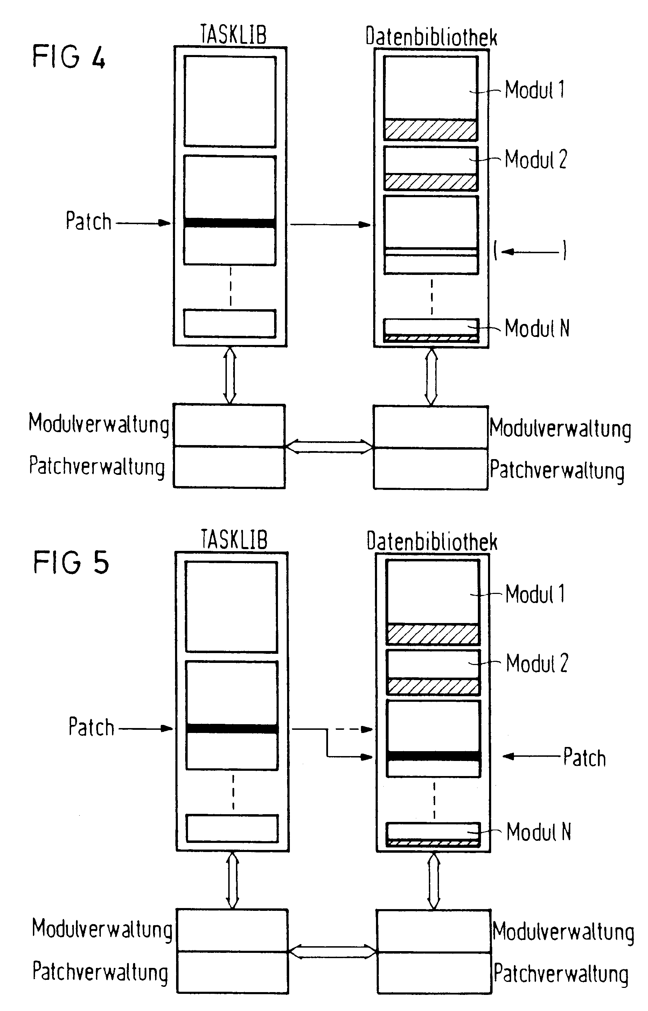

FIG 4 demonstriert, wie die einzelnen Module um zusätzlichen Speicherplatz erweitert werden. Dieser zusätzliche Speicherplatz wird quasi an die Module ' angehängt' und im späteren Verlauf mit den entsprechenden Teilnehmerdaten beschrieben. Die 'neuen' Module werden dann von einer Shift-Prozedur zu einer aktualisierten Datenbibliothek zusammengebunden, wobei die 'neuen' Modulanfangsadressen den Modulverwaltungen mitgeteilt werden. Wie aus FIG 3 ersichtlich, ist die Adresse, an der ursprünglich der Patch eingefügt war, verschoben.

In FIG 5 wird der Patch wieder eingefügt. Durch das Einfügen des Patches wird die Patchadresse in der Patchverwaltung aktualisiert. Die aktualisierte Patchadresse wird darüber hinaus der Patchverwaltung der TASKLIB mitgeteilt und als Konsequenz der Adressierungscode des Patches der TASKLIB, der den Patch der Datenbibliothek adressiert, entsprechend geändert.

## Patentansprüche

1. Verfahren zum Verwalten von Teilnehmerdaten in einem Kommunikationssystem mit
   - Anschlußbaugruppen (LTG$_1$...LTG$_N$), über die Teilnehmer an das Kommunikationssystem angeschlossen sind,
   - einem der zentralen Systemsteuerung dienenden Multiprozessorsystem (CP),
   - einem externen Speichermedium (SP), auf dem Prozeduren und Daten, insbesondere Teilnehmerdaten des Kommunikationssystems in aus mehreren Modulen bestehenden Dateien zusammengefaßt sind und
   - den jeweiligen Modulen für Patch-Prozeduren zur Korrektur von Softwarefehlern residenter Prozeduren/Daten zugeordneten Modulverwaltungen und Patchverwaltungen,

   **dadurch gekennzeichnet,**

   daß das Hinzufügen neuer Teilnehmerdaten in die Dateien derart erfolgt, daß nach einem Umkopieren der Dateien in Hilfsdateien in Prozeduren/Daten des Kommunikationssystems eingefügte Patches durch erste Prozeduren gemäß den in der Patchverwaltung abgelegten Patchdaten wieder rückgängig gemacht werden,

   die von Patches befreiten Module durch eine zweite Prozedur um zusätzlichen Speicherplatz erweitert werden und eine Shift-Prozedur die derart erweiterten Module zu einer aktualisierten Datei zusammenbindet und die in der den Modulen zugeordneten Modul- und Patchverwaltungen abgelegten Anfangsadressen der Module aktualisiert,

   die eingangs entfernten Patches über eine vierte Prozedur gemäß den in der Patchverwaltung abgelegten Patchdaten unter neuen, durch den Bindevorgang verschobenen Adressen der vormals eingefügten Patches eingefügt werden, wobei durch systeminterne Patchprozeduren eine Aktualisierung der in der Patchverwaltung abgelegten Patchadressen durchgeführt wird, und

   die neuen Teilnehmerdaten über eine fünfte Prozedur in den zusätzlichen Speicherplatz eingeschrieben sowie die gesamten Dateien sukzessive in die Arbeitsspeicher der Kommunikationsanlage geladen werden.

## Claims

1. Method for controlling subscriber data in a communications system having
   - line trunk groups (LTG$_1$...LTG$_N$) via which subscribers are connected to the communications system,
   - a multiprocessor system (CP) which is used for central system control,

- an external storage medium (SP) on which procedures and data, in particular subscriber data relating to the communications system, are combined in files comprising a plurality of modules, and
- the respective modules for patch procedures for correction of software errors in resident module controllers and patch controllers assigned to procedures/data

characterized in that new subscriber data are inserted into the files in such a manner that, after the files have been copied into auxiliary files, patches which have been inserted into procedures/data of the communications system are cancelled again by means of first procedures in accordance with the patch data stored in the patch controller, the modules which have been freed of patches are expanded by an additional memory space by means of a second procedure, and a shift procedure connects the modules which have been expanded in such a manner together to form an updated file and updates the initial addresses of the modules stored in the module and patch controllers assigned to the modules, the patches which were initially removed are inserted, via a fourth procedure according to the patch data stored in the patch controller, at new addresses, which are shifted by means of the attachment process, of the patches which were previously inserted, updating of the patch addresses which are stored in the patch controller being carried out by means of system-internal patch procedures, and the new subscriber data being written into the additional memory space via a fifth procedure and all the files being loaded successively into the main memory of the communications system.

## Revendications

1. Procédé de gestion de données d'abonnés dans un système de communication comportant
   - des groupes de raccordement (LTG$_1$-...LTG$_N$), au moyen desquels des abonnés sont raccordés au système de communication,
   - un système multiprocesseur (CP) utilisé pour la commande centrale du système,
   - un support de mémoire externe (SP), dans lequel sont réunies des procédures et des données, notamment des données d'abonnés du système de communication dans des fichiers constitués de plusieurs modules, et
   - des unités de gestion de modules et des unités de gestion de corrections associées aux modules respectifs pour des procédures de correction visant à corriger des erreurs de logiciel de procédures/données résidentes,

caractérisé par le fait

que l'adjonction de nouvelles données d'abonnés dans les fichiers s'effectue de telle sorte qu'après un recopiage des fichiers dans des fichiers auxiliaires, on annule de nouveau des corrections introduites dans des procédures/données du système de communication, par des premières procédures suivant les données de correction mémorisées dans l'unité de gestion de correction,

on augmente les modules, qui sont libérés de corrections, d'un emplacement supplémentaire de mémoire par une seconde procédure et une procédure de transfert interconnecte les modules étendus de cette manière, pour former un fichier actualisé, et actualise les adresses initiales des modules, mémorisées dans les unités de gestion de modules et les unités de gestion de corrections associées aux modules,

on insère les corrections éliminées au départ au moyen d'une quatrième procédure, suivant les données de correction mémorisées dans l'unité de gestion de corrections, à de nouvelles adresses, décalées par l'opération d'interconnexion, des corrections insérées auparavant, une actualisation des adresses de correction mémorisées dans l'unité de gestion de corrections étant effectuée par des procédures de correction internes au système, et

on enregistre les nouvelles données d'abonnés au moyen d'une cinquième procédure à l'emplacement de mémoire supplémentaire, et on charge l'ensemble des fichiers successivement dans la mémoire de travail de l'installation de communication.

FIG 1

FIG 2

TASKLIB

Datenbibliothek

Modul 1

Modul 2

Patch →

Patch ← Patch

Modul N

Modulverwaltung

Modulverwaltung

Patchverwaltung

Patchverwaltung

FIG 3

TASKLIB

Datenbibliothek

Modul 1

Modul 2

Patch →

( ← )

Modul N

Modulverwaltung

Modulverwaltung

Patchverwaltung

Patchverwaltung

FIG 4

FIG 5